(19) Europäisches Patentamt
European Patent Office
Office européen des brevets

(11) **EP 4 224 665 A1**

(12) **EUROPEAN PATENT APPLICATION**

(43) Date of publication:
**09.08.2023 Bulletin 2023/32**

(21) Application number: **22188128.7**

(22) Date of filing: **01.08.2022**

(51) International Patent Classification (IPC):
**H02J 7/00** *(2006.01)*

(52) Cooperative Patent Classification (CPC):
**H02J 7/007194; H02J 7/00309**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **02.02.2022 JP 2022015080**

(71) Applicant: **KABUSHIKI KAISHA TOSHIBA**
**Minato-ku**
**Tokyo**
**105-0023 (JP)**

(72) Inventors:
• **FUJITA, Yumi**
  **Tokyo, 105-0023 (JP)**
• **MORITA, Tomokazu**
  **Tokyo, 105-0023 (JP)**
• **SUGIYAMA, Nobukatsu**
  **Tokyo, 105-0023 (JP)**

(74) Representative: **Marks & Clerk LLP**
**15 Fetter Lane**
**London EC4A 1BW (GB)**

(54) **MANAGEMENT METHOD, MANAGEMENT DEVICE, MANAGEMENT SYSTEM AND MANAGEMENT PROGRAM OF SECONDARY BATTERY AND BATTERY-MOUNTED DEVICE**

(57)    In an approach, a management method of a secondary battery (5) is provided. In the management method, temperature control of the secondary battery (5) is executed in a second period after a first period in which the secondary battery (5) is diagnosed, when the secondary battery (5) is charged under a charge condition under which precipitation of lithium metal in the secondary battery (5) is predicted based on a diagnosis result in the first period. In the temperature control of the secondary battery (5), a temperature of the secondary battery (5) after a time point of an end of charge under the charge condition in the second period is kept in a predetermined temperature range of a lower-limit temperature ($T_{low}$) to an upper-limit temperature ($T_{up}$).

FIG. 4

EP 4 224 665 A1

**Description**

FIELD

Disclosures described herein relate generally to a management method, a management device, a management system and a management program of a secondary battery and a battery-mounted device.

BACKGROUND

In recent years, a secondary battery, such as a lithium ion secondary battery, is mounted in battery-mounted devices such as a vehicle, a large-sized electricity storage device for an electric power system, a smartphone, a stationary power source device, a robot and a drone. If such a secondary battery is used for a long time, the secondary battery deteriorates, for example, since the internal state varies from the time of the start of use. Thus, in the battery-mounted device, the diagnosis of the secondary battery is periodically performed, for example, by periodically estimating the internal state of the mounted secondary battery. In the diagnosis of the secondary battery, for example, in the charge or discharge of the secondary battery, at least the electric current and voltage of the secondary battery are measured, and the internal state of the secondary battery is estimated by using the measurement result relating to the electric current and voltage of the secondary battery. In addition, based on the estimated internal state, it is determined whether lithium metal is precipitated in the negative electrode of the secondary battery, and deterioration degrees or the like of the positive electrode and negative electrode are determined.

While the secondary battery is being used from the time of the start of use, there is a case where, for example, a period is present in which the diagnosis of the secondary battery is difficult, for example, since sufficient measurement data to estimate the internal state in regard to the electric current and voltage of the secondary battery are not obtained. For example, during a period, such as in the winter, in which the environmental temperature at which the secondary battery is used is low, the internal resistance of the secondary battery becomes higher, and if the secondary battery is charged, the voltage of the secondary battery reaches an upper-limit voltage in the range of use in a short time. Consequently, sufficient measurement data to estimate the internal state in regard to the electric current and voltage of the secondary battery are not obtained, and the evaluation and diagnosis of the secondary battery become difficult.

In an operation period in which the secondary battery is being used, even in regard to the period in which the diagnosis of the secondary battery is difficult as described above, it is required to estimate in advance the state of the secondary battery, including, for example, a state as to whether lithium metal is precipitated in the negative electrode of the secondary battery by charge. In addition, in the period in which the diagnosis of the secondary battery is difficult, it is required to safely and properly manage the secondary battery, based on the state of the secondary battery estimated in advance.

BRIEF DESCRIPTION OF THE DRAWINGS

FIG. 1 is a schematic view illustrating an example of a management system according to an approach.

FIG. 2 is a schematic view for describing internal state parameters indicative of the internal state of a secondary battery.

FIG. 3 is a flowchart illustrating an example of a diagnosis process and a determination process of the secondary battery, which are executed by a processing unit of a management device according to the approach.

FIG. 4 is a flowchart illustrating an example of a process relating to temperature control in regard to the temperature of the secondary battery, which is executed by the processing unit of the management device according to the approach.

FIG. 5 is a flowchart illustrating an example of the process relating to the temperature control in regard to the temperature of the secondary battery, which is executed by the processing unit of the management device according to the approach, this example being different from the example of FIG. 4.

DETAILED DESCRIPTION

In an approach, a management method of a secondary battery is provided. In the management method, temperature control of the secondary battery is executed in a second period after a first period in which the secondary battery is diagnosed, when the secondary battery is charged under a charge condition under which precipitation of lithium metal in the secondary battery is predicted based on a diagnosis result in the first period. In the temperature control of the secondary battery, a temperature of the secondary battery after a time point of an end of charge under the charge condition in the second period is kept in a predetermined temperature range of a lower-limit temperature to an upper-limit temperature.

Hereinafter, approaches will be described with reference to the accompanying drawings.

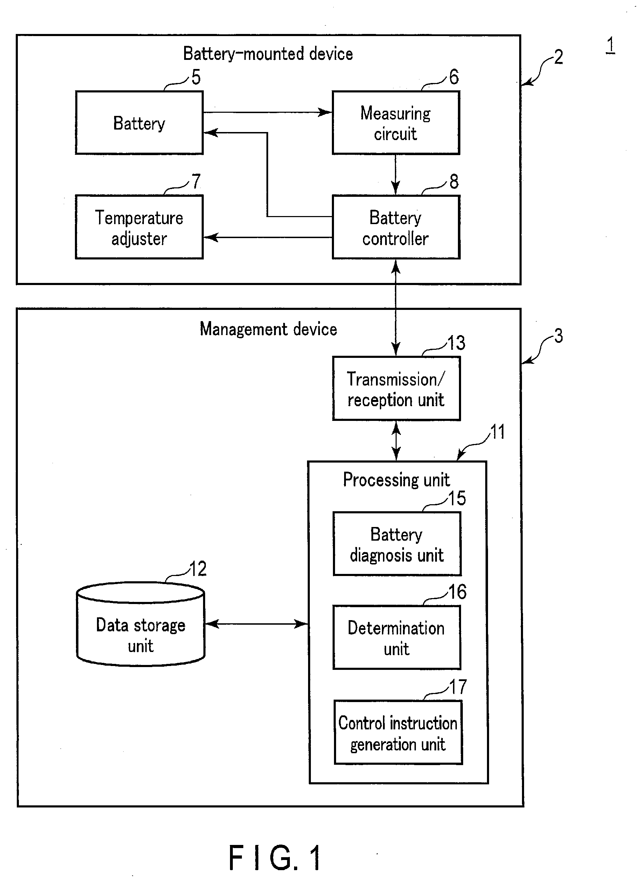

FIG. 1 is a schematic view illustrating an example of a management system according to an approach. As illustrated in FIG. 1, a management system 1 includes a battery-mounted device 2 and a management device 3. A secondary battery 5, a measuring circuit 6, a temperature adjuster 7 and a battery controller 8 are mounted in the battery-mounted device 2. Examples of the battery-mounted device 2 include a vehicle, a large-sized electricity storage device for an electric power system, a smartphone, a stationary power source device, a robot, a drone, and the like. Examples of the vehicle, which is the battery-mounted device 2, include a railway vehicle, an electric bus, an electric automobile, a plug-in hybrid automobile, an electric bicycle, and the like.

The secondary battery 5 is, for example, a lithium ion secondary battery, or the like. The secondary battery 5 may be formed of a unit cell (unit battery), or may be a battery module or a cell block, which is formed by electrically connecting a plurality of unit cells. When the secondary battery 5 is formed of unit cells, the unit cells may be electrically connected in series in the secondary battery 5, or may be electrically connected in parallel in the secondary battery 5. In addition, in the secondary battery 5, both of a series-connected structure in which a plurality of unit cells are connected in series, and a parallel-connected structure in which a plurality of unit cells are connected in parallel, may be formed. Besides, the secondary battery 5 may be any one of a battery string, a battery array and a storage battery, in which a plurality of battery modules are electrically connected.

The measuring circuit 6 detects and measures parameters relating to the secondary battery 5, for example, in the state in which the secondary battery 5 is being charged or discharged. In the measuring circuit 6, for example, parameters are periodically measured at a predetermined timing in one-time charge or discharge, or the like, of the secondary battery 5. In this case, in the one-time charge or discharge, or the like, of the secondary battery 5, the measuring circuit 6 measures parameters relating to the secondary battery 5 at each of a plurality of measuring time points, and measures the parameters relating to the secondary battery 5 multiple times. The parameters relating to the secondary battery 5 include an electric current flowing in the secondary battery 5, a voltage of the secondary battery 5, and a temperature of the secondary battery 5. Thus, the measuring circuit 6 includes an amperemeter that measures the electric current, a voltmeter that measures the voltage, and a temperature sensor that measures the temperature.

In addition, the measuring circuit 6 measures an environmental temperature of an environment in which the secondary battery 5 is used, that is, an environment in which the battery-mounted device 2 is located. The environmental temperature is an outside air temperature of a place where the secondary battery 5 and the battery-mounted device 2 are located. Besides, the environmental temperature in a certain predetermined period is defined by an average value in this predetermined period of the outside air temperatures of the place where the secondary battery 5 and the battery-mounted device 2 are located. In a certain situation, the temperature of the secondary battery 5 is equal or substantially equal to the environmental temperature of the environment in which the secondary battery 5 is used. In another situation, the temperature of the secondary battery 5 becomes higher than the environmental temperature of the environment in which the secondary battery 5 is used, for example, by heat generation due to charge and discharge, or the like, of the secondary battery 5. For example, it is assumed that a vehicle that is the battery-mounted device 2 is parked on a parking lot. In this case, the temperature of the parking lot becomes the environmental temperature of the environment in which the secondary battery 5 is used. Note that, even at the same place, the environmental temperature varies in accordance with seasons, time ranges in one day, and the like.

The temperature adjuster 7 includes a heater and a cooler, or the like. By being operated, the temperature adjuster 7 heats or cools the secondary battery 5. The battery controller 8 controls the operation of the secondary battery 5, for example, by controlling the charge and discharge of the secondary battery 5. In addition, by controlling the operation of the temperature adjuster 7, the battery controller 8 adjusts the temperature of the secondary battery 5 and executes temperature control of the secondary battery 5. The temperature control of the secondary battery 5 is executed, for example, based on the measurement result of the temperature of the secondary battery 5 in the measuring circuit 6.

The battery controller 8 constitutes a processing device (computer), and includes a processor and a non-transitory storage medium. The processor includes any one of a CPU (Central Processing Unit), an ASIC (Application Specific Integrated Circuit), a microcomputer, an FPGA (Field Programmable Gate Array), a DSP (Digital Signal Processor), and the like. The non-transitory storage medium may include an auxiliary storage device, in addition to a main storage device such as a memory. Examples of the non-transitory storage medium include a magnetic disk, an optical disc (CD-ROM, CD-R, DVD, or the like), a magnetooptical disc (MO, or the like), and a semiconductor memory. In the battery controller 8, each of the number of processors and the number of non-transitory storage media may be one or plural. In the battery controller 8, the processor executes a program or the like stored in the non-transitory storage medium or the like, thereby executing a process. In addition, in the battery controller 8, the program that is executed by the processor may be stored in a computer (server) connected via a network such as the Internet, or may be stored in a server or the like in a cloud environment. In this case, the processor downloads the program via the network.

The management device 3 executes management of the secondary battery 5, including diagnosis of the sec-

**EP 4 224 665 A1**

ondary battery 5, based on information relating to the secondary battery 5. Thus, the secondary battery 5 is a target of management by the management device 3. In the example of FIG. 1, the management device 3 is provided on the outside of the battery-mounted device 2. The management device 3 includes a processing unit 11, a data storage unit 12 and a transmission/reception unit 13. The processing unit 11 includes a battery diagnosis unit 15, a determination unit 16 and a control instruction generation unit 17. Each of the battery diagnosis unit 15, determination unit 16 and control instruction generation unit 17 executes a part of the process that is executed by the processing unit 11.

The management device 3 is, for example, a server that can communicate with the battery controller 8 via a network. In this case, like the battery controller 8, the management device 3 includes a processor and a non-transitory storage medium. In addition, the processing unit 11 executes at least a part of the process that is executed by the processor or the like of the management device 3, and the non- transitory storage medium of the management device 3 functions as the data storage unit 12. Besides, the transmission/reception unit 13 is composed of an interface or the like of a processing device, and the management device 3 can communicate with another processing device, such as the battery controller 8 of the battery-mounted device 2, via the transmission/reception unit 13.

Note that, in one example, the management device 3 may be a cloud server that is constituted in a cloud environment. The infrastructure of the cloud environment is constituted by a virtual processor such as a virtual CPU, and a cloud memory. Thus, when the management device 3 is the cloud server, the processing unit 11 executes a part of the process that is executed by the virtual processor. In addition, the cloud memory functions as the data storage unit 12. Besides, the transmission/reception unit 13 is composed of an interface with the cloud environment, or the like, and the management device 3 functioning as the cloud server can communicate with the processing device, such as the battery controller 8 of the battery-mounted device 2, via the transmission/reception unit 13.

Furthermore, the data storage unit 12 may be provided in a computer that is separate from the battery controller 8 and the management device 3. In this case, the management device 3 is connected via a network to the computer in which the data storage unit 12 or the like is provided. Besides, the management device 3 may be mounted in the battery-mounted device 2. In this case, the management device 3 is composed of a processing device or the like, which is mounted in the battery-mounted device 2. In addition, when the management device 3 is mounted in the battery-mounted device 2, one processing device or the like mounted in the battery-mounted device 2 may execute the process of the management device 3, which will be described later, and the process of the battery controller 8, such as the control or the like of the charge and discharge of the secondary battery 5. Hereinafter, the process of the management device 3 is described.

The processor or the like of the management device 3 executes diagnosis in regard to the secondary battery 5 that is a target, including estimation of the internal state, and the determination of the deterioration degrees of the positive electrode and the negative electrode. The diagnosis in regard to the secondary battery 5 is, for example, periodically executed after a time point of the start of use of the secondary battery 5. In the diagnosis in regard to the secondary battery 5, a control instruction from the control instruction generation unit 17 of the processing unit 11 of the management device 3 is transmitted to the battery controller 8 via the transmission/reception unit 13, and the battery controller 8 charges or discharges the secondary battery 5 under predetermined conditions, based on the received control instruction.

Here, the data indicative of the predetermined conditions in the charge or discharge of the secondary battery 5, which is executed in the diagnosis of the secondary battery 5, is stored, for example, in the data storage unit 12 or the like. The above-described predetermined conditions include, for example, a condition relating to an SOC (state of charge) at the time of starting charge or at the time of starting discharge; a condition relating to the SOC range of the secondary battery 5 in the charge or discharge; a condition relating to an electric current (the C rate of the secondary battery 5) flowing in the secondary battery 5 in the charge or discharge; a condition relating to the temperature of the secondary battery 5 in the charge or discharge; a condition relating to the environmental temperature of the environment in which the charge or discharge of the secondary battery 5 is executed; and a condition for ending the charge or discharge.

Under the predetermined conditions, the current value of the electric current of the secondary battery 5 is set to a relatively small value. Thus, in the diagnosis in regard to the secondary battery 5, the secondary battery 5 is charged or discharged at a relatively low rate. In addition, under the predetermined conditions, the SOC range is set to a relatively large value. Thus, in the diagnosis in regard to the secondary battery 5, the secondary battery 5 is charged or discharged with a relatively wide SOC range. Besides, under the predetermined conditions, the environmental temperature is set in a normal temperature range around room temperature, and is set, for example, in a range of 15°C to 35°C. Thus, in the diagnosis in regard to the secondary battery 5, the secondary battery 5 is charged or discharged in an environment in which the environmental temperature is in the normal temperature range.

In the diagnosis of the secondary battery 5, in the state in which the secondary battery 5 is being charged or discharged under the above-described predetermined conditions, the measuring circuit 6 measures the above-described parameters relating to the secondary battery 5. Then, in the management device 3, measurement data, which is indicative of a measurement result in the measuring circuit 6 of the above-described parameters relating to the secondary battery 5, is received in the transmission/reception unit 13, and the processing unit 11 acquires the received measurement data.

The measurement data is generated by the battery controller 8, for example, based on the measurement result or the like in the measuring circuit 6.

In the state in which the secondary battery 5 is being charged or discharged under the above-described predetermined conditions, the measuring circuit 6 measures the parameters relating to the secondary battery 5 at each of a plurality of measuring time points. Thus, the measurement data that the transmission/reception unit 13 receives includes measurement values of the parameters relating to the secondary battery 5 at each of a plurality of measuring time points (measurements of multiple times). In addition, the measurement data includes a time variation (time history) of the parameters relating to the secondary battery 5 in the charge or discharge of the secondary battery 5 under the above-described predetermined conditions. Accordingly, the measurement data includes a time variation (time history) of the electric current of the secondary battery 5, a time variation (time history) of the voltage of the secondary battery 5, and a time variation (time history) of the temperature of the secondary battery 5.

In addition, either the battery controller 8, or the processing unit 11 (processor) or the like of the management device 3, may estimate a time variation (time history) in the charge or discharge of the secondary battery 5 under the above-described predetermined conditions in regard to either the charge amount or the SOC of the secondary battery 5, based on the measurement result or the like in the measuring circuit 6 of the parameters relating to the secondary battery 5. In addition, the measurement data may include data indicative of a relation of the measured parameters relating to the secondary battery 5 to either the estimated charge amount or SOC of the secondary battery 5. In this case, for example, the measurement data includes the data indicative of the relation of the measured voltage of the secondary battery 5 to either the estimated charge amount or SOC of the secondary battery 5. The processing unit 11 can write the above-described measurement data in the data storage unit 12.

Here, the charge amount of the secondary battery 5 can be calculated based on the charge amount (SOC) of the secondary battery 5 at the time of starting charge or at the time of starting discharge under the above-described predetermined conditions, and the time variation of the electric current of the secondary battery 5. In this case, the charge amount of the secondary battery 5 is calculated by a current integration method. Besides, the charge amount of the secondary battery 5 can also be calculated by a calculation method using the relation between an inter-terminal voltage and the charge amount in the secondary battery 5, an estimation method using a Kalman filter, and the like.

In addition, the SOC of the secondary battery 5 is defined, for example, based on the voltage of the secondary battery 5. In the secondary battery 5, as regards the voltage, a lower-limit voltage Vmin and an upper-limit voltage Vmax are defined. In the secondary battery 5, for example, a state, in which an open circuit voltage (OCV) or a voltage in discharge under a certain defined condition is the lower-limit voltage Vmin, is defined as a state in which the SOC is 0%, and a state, in which the open circuit voltage or the voltage in charge under a certain defined condition is the upper-limit voltage Vmax, is defined as a state in which the SOC is 100%. In addition, in the secondary battery 5, a discharge capacitance from the state in which the SOC is 100% to the state in which the SOC is 0%, or a charge capacitance from the state in which the SOC is 0% to the state in which the SOC is 100%, is the battery capacitance. Besides, in the secondary battery 5, the ratio of the residual charge amount up to the state in which the SOC is 0% to the battery capacitance is defined as the SOC. Accordingly, the SOC of the secondary battery 5 can be calculated based on the charge amount or the like of the secondary battery 5.

In the diagnosis of the secondary battery 5, the battery diagnosis unit 15 acquires the above-described measurement data, and estimates the internal state of the secondary battery 5, based on the measurement data. In the present approach, the battery diagnosis unit 15 estimates internal state parameters indicative of the internal state of the secondary battery 5. In one example, the battery diagnosis unit 15 analyzes at least the data indicative of the time variations of the electric current and voltage of the secondary battery 5 in the charge or discharge under the above-described predetermined conditions. In this case, a charge curve analysis or a discharge curve analysis in regard to the secondary battery 5 is executed by the battery diagnosis unit 15. In addition, the battery diagnosis unit 15 may analyze the data indicative of the time variation of the temperature of the secondary battery 5, in addition to the data indicative of the time variations of the electric current and voltage of the secondary battery 5.

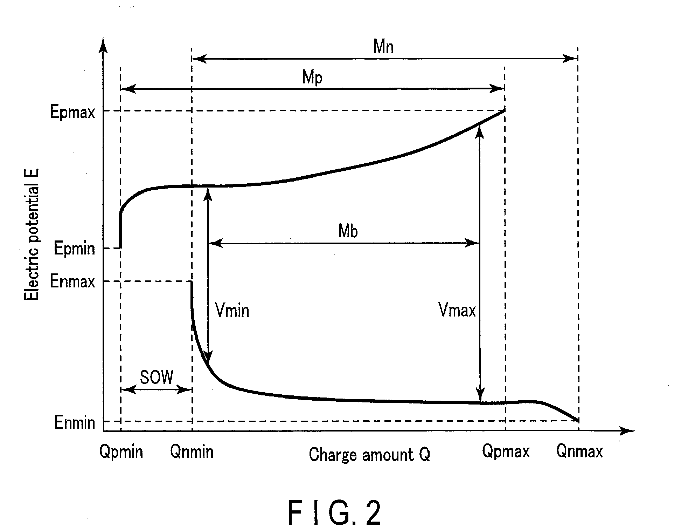

FIG. 2 is a schematic view for describing the internal state parameters indicative of the internal state of the secondary battery. In FIG. 2, the abscissa axis indicates a charge amount Q, and the ordinate axis indicates an electric potential E. As illustrated in FIG. 2, in the secondary battery 5, as regards a positive electrode electric potential, a lower-limit electric potential Epmin and an upper-limit electric potential Epmax are defined, and the positive electrode electric potential increases as the charge amount of the positive electrode becomes greater. In addition, in the positive electrode, a charge amount in a state in which the positive electrode electric potential becomes the lower-limit electric potential Epmin is an initial charge amount Qpmin of the positive electrode, and a charge amount in a state in which the positive electrode electric potential becomes the upper-limit electric potential Epmax is an upper-limit charge amount Qpmax of the positive electrode. Furthermore, a charge amount until the charge amount of the positive electrode reaches the upper-limit charge amount Qpmax from the initial charge amount Qpmin is a positive electrode capacitance Mp of the secondary battery 5, which corresponds to the chargeable/dischargeable amount of the positive electrode of the second battery 5.

In the secondary battery 5, as regards a negative electrode electric potential, a lower-limit electric potential Enmin and an upper-limit electric potential Enmax are defined, and the negative electrode electric potential decreases as the charge amount of the negative electrode becomes greater. In addition, in the negative electrode, a charge amount in a state in which the negative electrode electric potential becomes the upper-limit electric potential Enmax is an initial charge amount Qnmin of the negative electrode, and a charge amount in a state in which the negative electrode electric potential becomes the lower-limit electric potential Enmin is an upper-limit charge amount Qnmax of the negative electrode. Furthermore, a charge amount until the charge amount of the negative electrode reaches the upper-limit charge amount Qnmax from the initial charge amount Qnmin is a negative electrode capacitance Mn of the secondary battery 5, which corresponds to the chargeable/dischargeable amount of the negative electrode of the second battery 5.

The internal state parameters of the secondary battery 5 include the above-described positive electrode capacitance Mp, negative electrode capacitance Mn, initial charge amount Qpmin of the positive electrode, and initial charge amount Qnmin of the negative electrode. In addition, the internal state parameters of the secondary battery 5 include a positive electrode mass that is a parameter corresponding to the positive electrode capacitance Mp, and a negative electrode mass that is a parameter corresponding to the negative electrode capacitance Mn. The positive electrode mass can be calculated based on the positive electrode capacitance and the kind of material, of which the positive electrode is formed. Similarly, the negative electrode mass can be calculated based on the negative electrode capacitance and the kind of material, of which the negative electrode is formed. Furthermore, the internal state parameters of the secondary battery 5 include a positive electrode capacity retention ratio and a negative electrode capacity retention ratio. Here, the positive electrode capacity retention ratio is the ratio of the estimated positive electrode capacitance to the positive electrode capacitance at the time of the start of use of the secondary battery 5, and the negative electrode capacity retention ratio of the secondary battery 5 is the ratio of the estimated negative electrode capacitance to the negative electrode capacitance at the time of the start of use.

In addition, the internal state parameters of the secondary battery 5 include a shift of operation window (SOW) that is a shift between the initial charge amount Qpmin of the positive electrode and the initial charge amount of Qnmin of the negative electrode. Further, the internal state parameters of the secondary battery 5 include a parameter relating to an internal resistance of the secondary battery 5. The parameter relating to the internal resistance may include a resistance or the like of each of the positive electrode and negative electrode, in addition to the internal resistance in the entirety of the secondary battery 5. Note that FIG. 2 also illustrates a battery capacitance Mb that is one of battery characteristics of the secondary battery 5. The battery capacitance Mb corresponds to a charge amount until the voltage of the secondary battery 5 (the difference between the positive electrode electric potential and the negative electrode electric potential) reaches an upper-limit voltage Vmax from a lower-limit voltage Vmin, as described above.

In the present approach, a battery model of the secondary battery 5 is stored in the data storage unit 12. The battery model includes data indicative of a relation of the internal state of the secondary battery 5 to at least one of the voltage and the electric current of the secondary battery 5, and includes, for example, a calculation formula for calculating at least one of the voltage and the electric current of the secondary battery 5 from the internal state of the secondary battery 5. Accordingly, the battery model includes data indicative of a relation of the internal state parameters, such as the positive electrode capacitance and negative electrode capacitance, to at least one of the electric current and the voltage of the secondary battery 5. Note that the relation of the internal state to each of the electric current and the voltage of the secondary battery 5 varies in accordance with the temperature or the like of the secondary battery 5. Thus, in the battery model of the secondary battery 5, the relation of the internal state to at least one of the electric current and the voltage of the secondary battery 5 may be set for each of a plurality of mutually different temperatures.

In the above-described charge curve analysis or discharge curve analysis of the secondary battery 5, the battery diagnosis unit 15 executes a fitting calculation (regression calculation) by using at least the measurement result, which relates to the voltage and electric current of the secondary battery 5 and is included in the measurement data, and the data indicative of the relation of the internal state of the secondary battery 5 to the voltage and the electric current of the secondary battery 5. At this time, in the calculation formula for calculating at least the voltage and the electric current of the secondary battery 5 from the internal state of the secondary battery 5, the fitting calculation is executed by using one or more of the internal state parameters as a variable. Then, the battery diagnosis unit 15 estimates the internal state of the secondary battery 5 by calculating, by the fitting calculation, one or more internal state parameters serving as a variable. The battery diagnosis unit 15 can write in the data storage unit 12 an estimation result of the internal state of the secondary battery 5, including the estimation value of the internal state parameter of the secondary battery 5. Note that in the fitting calculation for calculating the internal state parameters, use may be made of the measurement result relating to the temperature of the secondary battery 5 and the data indicative of the relation of the internal state of the secondary battery 5 to the temperature of the secondary battery 5, in addition to the measurement result relating to the voltage and electric current of the secondary battery 5 and the data indicative of the relation of the internal state of the secondary battery 5 to the voltage and electric current of the secondary battery 5.

In one example, as the data indicative of the relation of the internal state of the secondary battery 5 to a voltage V(t) at a time instant t of the secondary battery 5, a calculation formula of equation (1) is included in the battery model.

Then, the battery diagnosis unit 15 estimates the internal state of the secondary battery 5 by executing the fitting calculation by using the measurement result of the voltage V(t) of the secondary battery 5 included in the measurement data, and the calculation formula of equation (1) included in the battery model. In the fitting calculation using equation (1), for example, the positive electrode capacitance Mp, negative electrode capacitance Mn, initial charge amount Qpmin of the positive electrode, initial charge amount Qnmin of the negative electrode, and parameter R relating to the internal resistance are set as the internal state parameters, and the fitting calculation is executed by using these internal state parameters as variables.

$$V(t) = Ep\,(Mp\,,Qpmin) - En\,(Mn\,,Qnmin) + R \times I \qquad (1)$$

In equation (1), I is an electric current of the secondary battery 5, and a measurement value or the like included in the measurement data is used as the electric current I. In addition, in equation (1), Ep(Mp, Qpmin) indicates a function for calculating an open circuit electric potential (OCP) of the positive electrode by using at least the positive electrode capacitance Mp and the initial charge amount Qpmin of the positive electrode as variables, and En(Mn, Qnmin) indicates a function for calculating an open circuit electric potential (OCP) of the negative electrode by using at least the negative electrode capacitance Mn and the initial charge amount Qnmin of the negative electrode as variables.

Note that a method of estimating the internal state of the secondary battery by the charge curve analysis is disclosed in reference document 1 (Jpn. Pat. Appln. KOKAI Publication No. 2018-147827). In reference document 1, too, the internal state of the secondary battery is estimated by executing the fitting calculation by using at least the measurement result relating to the electric current and voltage of the secondary battery and the data indicative of the relation of the internal state of the secondary battery to the voltage and electric current of the secondary battery. In the approach, like reference document 1, the internal state of the secondary battery 5 may be estimated. When estimating the internal state of the secondary battery 5, the battery diagnosis unit 15 reads out the battery model including the calculation formula of equation (1) or the like from the data storage unit 12. In addition, the battery diagnosis unit 15 can store, in the data storage unit 12, estimation values that become necessary in a subsequent process, among provisional estimation values and final estimation values relating to the internal state parameters.

In addition, the battery diagnosis unit 15 may estimate battery characteristics of the secondary battery 5, based on the estimated internal state of the secondary battery 5. The battery characteristics of the secondary battery 5 include the open circuit voltage and OCV curve of the secondary battery 5, and the like, in addition to the above-described battery capacitance Mb. Here, the OCV curve is a function indicative of the relation between a parameter other than the OCV, and the OCV, and is, for example, a function indicative of the relation of the OCV to the SOC or the charge amount. In addition, the internal resistance of the entirety of the secondary battery 5 indicates the internal state of the secondary battery 5, as described above, and also indicates the battery characteristics of the secondary battery 5. Reference document 1 discloses a method of estimating battery characteristics of the secondary battery 5, based on the internal state of the secondary battery 5. In the approach, like reference document 1, the battery characteristics of the secondary battery 5 may be estimated.

Furthermore, in the diagnosis of the secondary battery 5, the battery diagnosis unit 15 determines real-time deterioration degrees or the like of the positive electrode and the negative electrode, based on the estimation result of the internal state of the secondary battery 5. In one example, the deterioration degree of the positive electrode is determined based on the estimation result of any one of the positive electrode capacitance Mp, initial charge amount Qpmin of the positive electrode, SOW, and resistance of the positive electrode. As the positive electrode capacitance Mp is smaller, the deterioration degree of the positive electrode is determined to be higher. In addition, as the variation of the resistance of the positive electrode from the time of the start of use of the secondary battery 5, or the like, is greater, the deterioration degree of the positive electrode is determined to be higher.

In addition, in one example, the deterioration degree of the negative electrode is determined based on the estimation result of any one of the negative electrode capacitance Mn, initial charge amount Qnmin of the negative electrode, SOW, and resistance of the negative electrode. As the negative electrode capacitance Mn is smaller, the deterioration degree of the negative electrode is determined to be higher, and as the variation of each of the initial charge amount Qnmin and the SOW from the time of the start of use of the secondary battery 5, or the like, is greater, the deterioration degree of the negative electrode is determined to be higher. In particular, when the negative electrode capacitance Mn is small and the SOW sharply increases, the occurrence of lithium metal precipitation is determined. Further, as the variation of the resistance of the negative electrode from the time of the start of use of the secondary battery 5, or the like, is greater, the deterioration degree of the negative electrode is determined to be higher. The battery diagnosis unit 15 may calculate parameters indicative of deterioration degrees in regard to the positive electrode and the negative electrode, in the determination of the deterioration degrees of the positive electrode and the negative electrode. In this case, in regard to each of the positive electrode and negative electrode, as the deterioration degree is higher, the parameter is calculated to be a greater value. The battery diagnosis unit 15 can write in the data storage unit 12 the determination result of the deterioration degree of each of the positive electrode and the negative electrode.

The determination unit 16 acquires a real-time diagnosis result relating to the secondary battery 5. Then, the determination unit 16 executes determination, based on the real-time deterioration degree of the negative electrode included in the diagnosis result of the secondary battery 5. In the determination based on the deterioration degree of the negative electrode, a first reference level, and a second reference level, at which the deterioration degree is higher than at the first reference level, are set in regard to the deterioration degree of the negative electrode. Here, a period in which the diagnosis relating to the secondary battery 5 is executed is set as a first period. The determination unit 16 determines whether the negative electrode deteriorates over the first reference level in the first period. In other words, it is determined whether the deterioration degree of the negative electrode of the secondary battery 5, which is based on the internal state of the secondary battery 5 in the first period, exceeds the first reference level. In addition, when the negative electrode deteriorates over the first reference level in the first period that is the period in which the diagnosis is executed in real time, the determination unit 16 determines whether the deterioration degree of the negative electrode in the first period exceeds the second reference level.

In one example, in the diagnosis of the secondary battery 5, a parameter a indicative of the deterioration degree of the negative electrode is calculated as described above, and a threshold $\alpha th1$ and a threshold $ath2$, which is greater than the threshold $\alpha th1$, are set in connection with the parameter a. In addition, based on the fact that the calculation value of the parameter a in the diagnosis in the first period is greater than the threshold $\alpha th1$, it is determined that the deterioration degree of the negative electrode in the first period exceeds the first reference level. Moreover, based on the fact that the calculation value of the parameter a in the diagnosis in the first period is greater than the threshold $ath2$, it is determined that the deterioration degree of the negative electrode in the first period exceeds the second reference level.

In addition, when the deterioration degree of the negative electrode in the first period exceeds the second reference level, the determination unit 16 determines that lithium metal is precipitated in the negative electrode in the first period. Furthermore, when the deterioration degree of the negative electrode in the first period exceeds the second reference level, the control instruction generation unit 17 transmits, for example, a control instruction to halt the use of the secondary battery 5 to the battery controller 8 via the transmission/reception unit 13. Then, based on the received control instruction, the battery controller 8 forcibly halts the use of the secondary battery 5, for example, by disabling charge of the secondary battery 5 and disabling discharge of the secondary battery 5. Besides, when the deterioration degree of the negative electrode in the first period exceeds the second reference level, the processing unit 11 or the like may issue an alert to halt the use of the secondary battery 5, instead of forcibly halting the use of the secondary battery 5, or in addition to forcibly halting the use of the secondary battery 5. In this case, the alert is issued by using a user interface (not illustrated) or the like, and an alert is issued by either screen display or sound, or the like.

Furthermore, based on the diagnosis result of the secondary battery 5 in the first period, the determination unit 16 predicts the state of the secondary battery 5 in a second period after the first period. In one example, each of the four seasons is set as one period that may become the first period, the second period or the like. For example, when the summer is the first period, the autumn is the second period, and when the autumn is the first period, the winter is the second period. In another example, in one day, four time ranges of the morning, afternoon, evening and night are specified, and each of the four time ranges is set as one period that may become the first period, the second period or the like. For example, when the afternoon is the first period, the evening is the second period, and when the evening is the first period, the night is the second period.

When the deterioration degree of the negative electrode of the secondary battery 5 in the first period exceeds the first reference level and is equal to or less than the second reference level, the determination unit 16 acquires charge conditions in the charge of the secondary battery 5 that is planned to be executed in the second period. The determination unit 16 acquires, as the charge conditions in the charge of the secondary battery 5 in the second period, a condition relating to the SOC range of the secondary battery 5 in the charge; a condition relating to an electric current (the C rate of the secondary battery 5) flowing in the secondary battery 5 in the charge; a condition relating to the environmental temperature of the environment in which the charge is executed; and the like. The information relating to the charge conditions in the charge of the secondary battery 5 in the second period may be stored in the data storage unit 12, or may be input by an operator or the like by using a user interface or the like. In addition, the environmental temperature or the like of the environment in which the charge of the second battery 5 is executed in the second period may be searched via a network. For example, when the autumn is the first period and the winter is the second period, the environmental temperature of the environment in which the charge of the second battery 5 is executed in the second period (winter) may be acquired based on a temperature prediction or the like for the winter that is the second period by a weather forecast or the like. The environmental temperature in the second period is defined by an average value in the second period of outside air temperatures of the place where the secondary battery 5 and the battery-mounted device 2 are located. Note that, like the environmental temperature in the second period, the environmental temperature in the first period is defined by an average value in the first period of outside air temperatures of the place where the secondary battery 5 and the battery-mounted device 2 are located.

When the deterioration degree of the negative electrode of the secondary battery 5 in the first period exceeds the first reference level and is equal to or less than the second reference level, the determination unit 16 predicts, based on the charge conditions in the charge of the secondary battery 5 in the second period, whether lithium metal is precipitated in the negative electrode of the secondary battery 5 by the charge under the acquired charge conditions in the second period. Then, if it is predicted that lithium metal is precipitated in the secondary battery 5 by the charge in the second period, the determination unit 16 determines to execute temperature control of the secondary battery 5, which will be described later, after a time point of the end of the charge under the charge conditions under which the precipitation of lithium metal is predicted in the second period. Accordingly, in the present approach, whether or not to execute the temperature control for the temperature of the secondary battery 5 after the time point of the end of the charge in the second period is determined based on the diagnosis result of the secondary battery 5 in the first period, including the estimation result of the internal state of the secondary battery 5 in the first period, and the charge conditions in the charge of the secondary battery 5 that is planned to be executed in the second period.

In one example, when the deterioration degree of the negative electrode of the secondary battery 5 in the first period exceeds the first reference level and is equal to or less than the second reference level, it is determined to execute the temperature control of the secondary battery 5 after the time point of the end of the charge in the second period, based on the fact that the environmental temperature at which the secondary battery 5 is charged in the second period is, for example, a low temperature of 10°C or less. Here, in this example, assume that it was determined that, in the autumn that is the first period, the deterioration degree of the negative electrode of the secondary battery 5 exceeds the first reference level and is equal to or less than the second reference level. In addition, assume that it was predicted that the secondary battery 5 would be charged in the environment in which the environmental temperature in the winter that is the second period would be a low temperature of 10°C or less. In this case, before the second period, it is determined in advance to execute the temperature control for the temperature of the secondary battery 5 after the time point of the end of the charge in the winter that is the second period.

In addition, assume that it was predicted that lithium metal would not be precipitated in the secondary battery 5 by the charge or the like in the second period, based on the charge conditions or the like in the charge of the secondary battery 5 in the second period. In this case, the determination unit 16 determines to not execute the temperature control for the temperature of the secondary battery 5 in the second period. For example, assume that the first period is the summer and the second period is the autumn. In this case, even if it is determined that, in the summer that is the first period, the real-time deterioration degree of the negative electrode of the second battery 5 exceeds the first reference level and is equal to or less than the second reference level, the secondary battery 5 will be charged in the autumn that is the second period, for example, in the normal temperature range of 15°C to 35°C. Thus, before the second period, it is determined in advance to not execute the temperature control for the temperature of the secondary battery 5 in the autumn that is the second period.

When the temperature control of the secondary battery 5 is executed in the second period, the control instruction generation unit 17 transmits, via the transmission/reception unit 13, to the battery controller 8 a control instruction to keep a temperature T of the secondary battery 5 in a predetermined temperature range of a lower-limit temperature $T_{low}$ to an upper-limit temperature $T_{up}$ after the time point of the end of the charge of the secondary battery 5 in the second period. In addition, based on the received control instruction, the battery controller 8 keeps the temperature T in the above-described predetermined temperature range, for example, by controlling the operation of the temperature adjuster 7, after the time point of the end of the charge of the secondary battery 5 in the second period. At this time, the temperature T of the secondary battery 5 is adjusted by the operation of the temperature adjuster 7 being controlled based on the measurement result or the like of the temperature T of the secondary battery 5 in the measuring circuit 6. Furthermore, in the second period, the above-described temperature control of the secondary battery 5, which is based on the control instruction by the control instruction generation unit 17, is continuously executed over a predetermined duration time from the time point of the end of the charge of the secondary battery 5.

Here, in the state in which the negative electrode deteriorates to some degree, such as in the state in which the deterioration degree of the negative electrode exceeds the first reference level, if the secondary battery 5 is charged in the environment in which the environmental temperature is low, lithium metal is precipitated in the negative electrode of the secondary battery 5. In addition, during the period, such as in the winter, in which the environmental temperature at which the secondary battery 5 is used is low, the internal resistance of the secondary battery 5 becomes high, and if the secondary battery 5 is charged, the voltage of the secondary battery 5 reaches the above-described upper-limit voltage $V_{max}$ in the range of use in a short time. Consequently, in the environment in which the environmental temperature is low, sufficient measurement data to estimate the internal state in regard to the electric current and voltage of the secondary battery 5 is not obtained, and the evaluation and diagnosis of the secondary battery 5 become difficult. Accordingly, in one example of the present approach, based on the diagnosis result of the secondary battery 5 in the autumn that is the first period, it is predicted whether lithium metal is precipitated in the negative electrode of the secondary battery 5 by the charge in the winter that is the second period. In addition, when it is predicted that lithium metal is precipitated in the secondary battery 5 by the charge under the charge conditions in the winter, the temperature control to keep the temperature of the secondary battery 5 in the predetermined temperature range is executed after the time point of the end of the charge of the secondary battery 5 in the winter that is the second period.

When lithium metal is precipitated in the negative electrode of the secondary battery 5, an oxidation reaction of the precipitated lithium metal occurs if the temperature of the secondary battery 5 rises to some degree, for example, up to 25°C or more. By the oxidation reaction of the precipitated lithium metal, heat occurs in the secondary battery 5. Thus, when lithium metal is precipitated in the negative electrode by the charge of the secondary battery 5, the occurrence of an unintended oxidation reaction of the lithium metal needs to be suppressed from the standpoint of, for example, suppressing an excessive temperature rise of the secondary battery 5 by the heat generation due to the oxidation reaction of the lithium metal. For example, in the state in which the secondary battery 5 is not charged or discharged, that is, in the state in which the secondary battery 5 does not operate, the occurrence of an unintended oxidation reaction of the lithium metal needs to be suppressed. Accordingly, when lithium metal is precipitated in the negative electrode by the charge of the secondary battery 5, it is necessary to intentionally oxidize the precipitated lithium metal, and to make a transition to the state in which a battery temperature rise due to the oxidation reaction of lithium does not progress in the secondary battery 5. Moreover, even in the intentional oxidation of the precipitated lithium metal, the temperature of the secondary battery 5 needs to be properly adjusted in such a state that the excessive temperature rise of the secondary battery 5 by the heat generation due to the oxidation reaction of the lithium metal is suppressed.

From the above standpoint, in the present approach, when it is predicted that lithium metal is precipitated in the secondary battery 5 by the charge in the second period, the temperature control to keep the temperature T of the secondary battery 5 in the above-described predetermined temperature range is executed after the time point of the end of the charge of the secondary battery 5 in the second period. Thus, even if lithium metal is precipitated in the secondary battery 5 by the charge, the precipitated lithium metal is intentionally oxidized by the temperature control for the temperature T of the secondary battery 5, which is executed after the time point of the end of the charge. In addition, even if lithium metal is precipitated in the secondary battery 5, since the precipitated lithium metal is intentionally oxidized by the temperature control, the entirety or substantially the entirety of the surface of the precipitated lithium metal is oxidized and is set in a protected state during a period in which the secondary battery 5 does not operate, until the next operation (charge or discharge). Therefore, the occurrence of an unintended oxidation reaction of lithium metal is effectively suppressed during the period until the next operation of the secondary battery 5.

In addition, the predetermined temperature range, within which the temperature T of the secondary battery 5 is kept in the temperature control that is executed after the time point of the end of the charge, is set in the following manner. Specifically, the lower-limit temperature Tlow of the predetermined temperature range is set based on, as a criterion, whether the lower-limit temperature Tlow is a temperature at which an oxidation reaction occurs in the lithium metal precipitated in the secondary battery 5. In addition, the lower-limit temperature Tlow of the predetermined temperature range is a temperature that is equal to or greater than a lower-limit value of the temperature range in which the oxidation reaction occurs in the lithium metal, and the oxidation reaction of the precipitated lithium metal occurs at the lower-limit temperature Tlow of the predetermined temperature range. On the other hand, the upper-limit temperature Tup of the predetermined temperature range is set based on the influence on the temperature T of the secondary battery 5 of the heat generation due to the oxidation reaction in the lithium metal precipitated in the secondary battery 5. Furthermore, the upper-limit temperature Tup of the predetermined temperature range is set at a temperature at which an excessive temperature rise of the secondary battery 5 by the heat generation due to the oxidation reaction can be suppressed by the operation control of the temperature adjuster 7. In one example, the lower-limit temperature Tlow is set at 25°C, and the upper-limit temperature Tup is set at 40°C. In addition, the temperature range of 25°C to 40°C becomes the predetermined temperature range.

Since the lower-limit temperature Tlow is set as described above, the oxidation reaction of the precipitated lithium metal properly occurs by executing the above-described temperature control after the time point of the end of the charge, and the lithium metal is properly oxidized. In addition, since the upper-limit temperature Tup is set as described above, in the state in which the above-described temperature control is being executed after the time point of the end of the charge, the calorific value due to the oxidation reaction of lithium metal does not excessively increase, and the calorific value in the secondary battery 5 due to the oxidation reaction of lithium metal is reduced. Thus, in the state in which the temperature control is being executed, the excessive temperature rise of the secondary battery 5 by the heat generation due to the oxidation reaction of lithium metal can properly be suppressed.

In addition, in the present approach, for example, when the secondary battery 5 is charged in the environment in which the environmental temperature is low in the second period, the above-described temperature control for the temperature T of the secondary battery 5 is executed. Thus, the environmental temperature of the environment, in which the secondary battery 5 is charged in the period (second period) during which the temperature control is executed, is lower than the environmental temperature of the environment in which the secondary battery 5 is charged in the period (first period) in which the secondary battery 5 was diagnosed before the period of the execution of the temperature control. In addition, the environmental temperature of the environment, in which the secondary battery 5 is charged in the period (second period) during which the temperature control is executed, is low in such a degree that the oxidation reaction of lithium metal precipitated in the secondary battery 5 does not occur. Thus, the lower-limit temperature Tlow of the predetermined temperature range in the temperature control is higher than the environmental temperature of the environment in which the secondary battery 5 is charged in the period (second period) in which the temperature control is executed.

In addition, in one example, when the temperature control is executed in the second period, the control instruction generation unit 17 or the like sets, based on the deterioration degree or the like of the negative electrode of the secondary battery 5 in the first period, at least one of the above-described predetermined temperature range that is the temperature range for keeping the temperature T of the secondary battery 5 in the temperature control, and the predetermined duration time that is a duration time for continuing the temperature control from the time point of the end of the charge. In this case, for example, as the deterioration degree of the negative electrode of the secondary battery 5 in the first period is higher, the predetermined temperature range for keeping the temperature of the secondary battery 5 is set to be lower. Specifically, as the deterioration degree of the negative electrode of the secondary battery 5 in the first period is higher, the lower-limit temperature Tlow and the upper-limit temperature Tup are set to be lower. Besides, as the deterioration degree of the negative electrode of the secondary battery 5 in the first period is higher, the duration time of the temperature control from the time point of the end of the charge in the second period is set to be longer.

As described above, in the present approach, when it is determined that the temperature control is executed in the second period, based on the diagnosis result of the secondary battery in the first period, the temperature control is executed to keep the temperature T of the secondary battery 5 in the predetermined temperature range of the lower-limit temperature Tlow to the upper-limit temperature Tup over the predetermined duration time from the time point of the end of the charge in the second period. In addition, when it is determined to execute the temperature control in the second period, the control instruction generation unit 17 may transmit to the battery controller 8 a control instruction to execute the temperature control for the temperature T of the secondary battery 5 even while the secondary battery 5 is being charged in the second period. In this case, if it is determined to execute the temperature control in the second period, the temperature T of the secondary battery 5 is kept in the predetermined temperature range of the lower-limit temperature Tlow to the upper-limit temperature Tup, even while the secondary battery 5 is being charged in the second period. Thus, even while the secondary battery 5 is being charged in the second period, the surface of the lithium metal precipitated in the secondary battery 5 is properly oxidized, and the excessive temperature rise of the secondary battery 5 by the heat generation due to the oxidation reaction of the lithium metal can properly be suppressed.

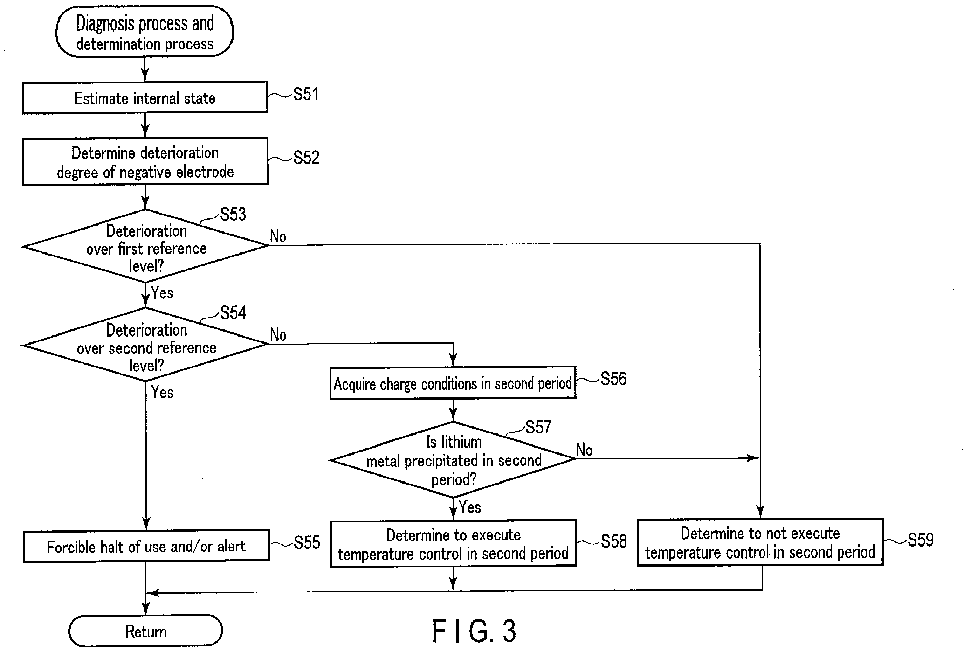

FIG. 3 is a flowchart illustrating an example of a diagnosis process and a determination process of the secondary battery, which are executed by the processing unit of the management device according to the approach. The processes illustrated in FIG. 3 are periodically executed at a predetermined timing. However, when sufficient measurement data to estimate the internal state in regard to the electric current and voltage of the secondary battery 5 is not acquired, for example, during a period in which the environmental temperature at which the secondary battery 5 is used is low, the processes illustrated in FIG. 3 are not executed. Besides, in the present approach, the period, in which the processes of FIG. 3 including the diagnosis process of the secondary battery 5 are executed, is defined as the first period.

If the processes of FIG. 3 are started, the battery diagnosis unit 15 of the processing unit 11 estimates the real-time internal state of the secondary battery 5, as described above (S51). Then, based on the estimation result of the internal state of the secondary battery 5, the battery diagnosis unit 15 determines the real-time deterioration degree of the negative electrode (S52). At this time, based on the estimation result of the internal state, the battery diagnosis unit 15 may determine the real-time deterioration degree of the positive electrode. Then, the determination unit 16 of the processing unit 11 determines whether the real-time deterioration degree of the negative electrode exceeds the above-described first reference level (S53). When the negative electrode deteriorates over the first reference level (S53-Yes), the determination unit 16 determines whether the real-time deterioration degree of the negative electrode exceeds the second reference level at which the real-time deterioration degree of the negative electrode is higher than at the first reference level (S54). When the negative electrode deteriorates over the second reference level (S54-Yes), the control instruction generation unit 17 or the like of the processing unit 11 executes at least either forcibly halting the use of the secondary battery 5, or issuing an alert to halt the use of the secondary battery 5 (S55).

When the deterioration degree of the negative electrode is equal to or less than the second reference level in S54 (S54-No), the determination unit 16 acquires, as described above, the charge conditions in the charge of the secondary battery 5 that is planned to be executed in the second period after the first period that is the period in which the diagnosis is executed (S56). Then, based on the charge conditions in the charge of the secondary battery 5 in the second period, the determination unit 16 predicts whether lithium metal is precipitated in the negative electrode of the secondary battery 5 by the charge under the acquired charge conditions in the second period (S57). Then, when it is predicted that lithium metal is precipitated by the charge in the second period (S57-Yes), the determination unit 16 determines to execute temperature control to keep the temperature T of the secondary battery 5 in the above-described predetermined temperature range in the second period (S58). At this time, the processing unit 11 or the like may set, based on the determination result or the like of the deterioration degree of the negative electrode in the first period, at least one of the predetermined temperature range that is the temperature range for keeping the temperature of the secondary battery 5 in the temperature control, and the duration time for continuing the temperature control of the secondary battery 5 from the time point of the end of the charge.

On the other hand, when it is predicted that lithium metal is not precipitated in the secondary battery 5 by the charge or the like in the second period (S57-No), the determination unit 16 determines to not execute the temperature control for the temperature of the secondary battery 5 in the second period (S59). Also when the deterioration degree of the negative electrode is equal to or less than the first reference level in S53 (S53-No), the determination unit 16 determines to not execute the temperature control for the temperature of the secondary battery 5 in the second period (S59).

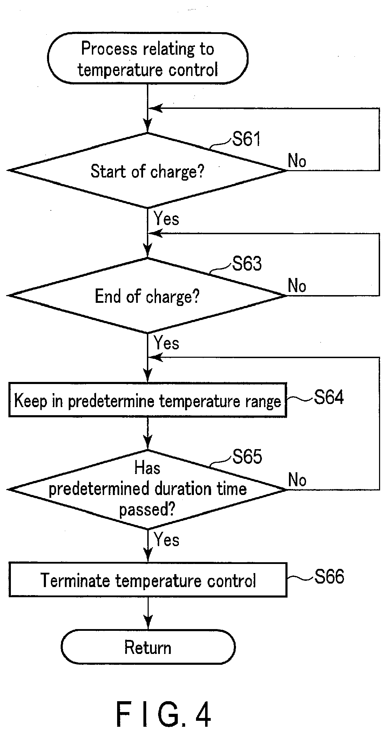

FIG. 4 is a flowchart illustrating an example of a process relating to temperature control in regard to the temperature of the secondary battery, which is executed by the processing unit of the management device according to the approach. The process illustrated in FIG. 4 is executed when the execution of the temperature control to keep the temperature T of the secondary battery 5 in the predetermined temperature range in the second period is determined in the process of FIG. 3. Thus, the process of FIG. 4 is not executed when it is determined in the process of FIG. 3 to not execute the temperature control for the temperature of the secondary battery 5 in the second period. Besides, when the temperature control is executed in the second period, it is assumed that the next charge or the like of the secondary battery 5 is started after the passage of a certain length of time from the time point of the end of the temperature control for the temperature T of the secondary battery 5.

If the process of FIG. 4 is started, the processing unit 11 or the like determines whether the charge of the secondary battery 5 is started (S61). When the charge of the secondary battery 5 is not started (S61-No), the process returns to S61 and stands by until the charge is started. On the other hand, when the charge is started (S61-Yes), the processing unit 11 or the like determines whether the charge of the secondary battery 5 ends (S63). When the charge does not end (S63-No), the process returns to S63, and the process from S63 is successively executed. Thus, the process stands by until the charge of the secondary battery 5 ends.

On the other hand, when the charge of the secondary battery 5 ends (S63-Yes), the control instruction generation unit 17 or the like continues the temperature control to keep the temperature T of the secondary battery 5 in the above-described predetermined temperature range, for example, by transmitting the control instruction to the battery controller 8 (S64). Then, the processing unit 11 or the like determines whether a predetermined duration time has passed since the time point of the end of the charge of the secondary battery 5 (S65). When the predetermined duration time has not passed (S65-No), the process returns to S64, and the process from S64 is successively executed. Thus, the temperature control to keep the temperature T of the secondary battery 5 in the predetermined temperature range is continued. On the other hand, when the predetermined duration time has passed (S65-Yes), the control instruction generation unit 17 or the like terminates the temperature control to keep the temperature T of the secondary battery 5 in the above-described predetermined temperature range (S66). After executing the process of S66, it is determined once again in S61 whether the charge of the secondary battery 5 is started.

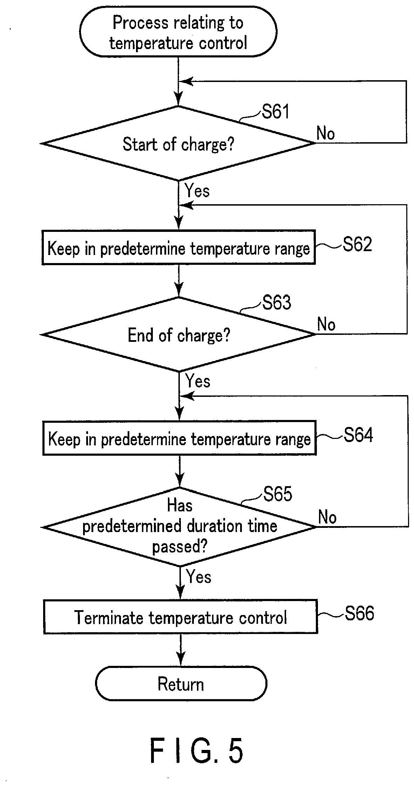

FIG. 5 is a flowchart illustrating an example of the process relating to the temperature control in regard to the temperature of the secondary battery, which is executed by the processing unit of the management device according to the approach, this example being different from the example of FIG. 4. Like the process of FIG. 4, the process illustrated in FIG. 5 is executed when the execution of the temperature control to keep the temperature T of the secondary battery 5 in the predetermined temperature range in the second period is determined in the process of FIG. 3. Like the process of FIG. 4, in the process of FIG. 5, the process of S61, and S63 to S66 is executed. However, in the example of FIG. 5, when the charge is started in S61 (S61-Yes), the control instruction generation unit 17 or the like executes the temperature control to keep the temperature T of the secondary battery 5 in the above-described predetermined temperature range of the lower-limit temperature Tlow to the upper-limit temperature Tup, for example, by transmitting the control instruction to the battery controller 8 (S62). Then, the process advances to S63. In addition, when the charge does not end in S63 (S63-No), the process returns to S62, and the process from S62 is successively executed. Thus, the temperature control to keep the temperature T of the secondary battery 5 in the predetermined temperature range is continued. In the example of FIG. 5, even while the secondary battery 5 is being charged, the temperature control to keep the temperature T of the secondary battery 5 in the above-described predetermined temperature range of the lower-limit temperature Tlow to the upper-limit temperature Tup is executed.

As described above, in the present approach, based on the diagnosis result of the secondary battery 5 in the first period and the charge conditions in the charge of the secondary battery 5 that is planned to be executed in the second period, it is predicted whether lithium metal is precipitated in the secondary battery 5 by the charge in the second period after the first period. Thus, even when the diagnosis of the secondary battery 5 is difficult in the second period, the state of the secondary battery 5 in the second period, including a state as to whether lithium metal is precipitated in the secondary battery 5 by the charge, can be predicted in advance in the first period before the second period.

Additionally, in the present approach, in the second period, when the secondary battery 5 is charged under the charge conditions under which the precipitation of lithium metal in the secondary battery 5 is predicted based on the diagnosis result or the like in the first period, the temperature control is executed to keep the temperature of the secondary battery 5 in the predetermined temperature range after the time point of the end of the charge under the charge conditions. By the execution of the temperature control in the second period, even if lithium metal is precipitated in the negative electrode by the charge in the second period, the surface of the precipitated lithium metal is properly oxidized, as described above, and the occurrence of an unintended oxidation reaction of the lithium metal can effectively be suppressed. Moreover, as described above, by the execution of the temperature control, the excessive temperature rise of the secondary battery 5 by the heat generation due to the oxidation reaction of lithium metal can properly be suppressed. Therefore, even in a period in which the diagnosis of the secondary battery 5 is difficult, the secondary battery 5 is safely and properly managed based on the state of the secondary battery 5, which is predicted in advance.

Additionally, in one example of the above-described approach, when the above-described temperature control is executed for the temperature of the secondary battery 5 in the second period, the predetermined temperature range for keeping the temperature of the secondary battery 5 in the temperature control is set to be lower as the deterioration degree of the negative electrode in the first period is higher. Here, in the secondary battery 5, the higher the degradation degree of the negative electrode, the greater the influence on the temperature of the secondary battery 5 of the heat generation due to the oxidation reaction in the precipitated lithium metal. Thus, by executing the temperature control by which the temperature of a secondary battery with a higher deterioration degree of the negative electrode is kept in a lower temperature range, the excessive temperature rise of the secondary battery 5 by the heat generation due to the oxidation reaction of lithium metal can more effectively be suppressed in the state in which the temperature control of the secondary battery 5 is being executed.

Additionally, in one example of the above-described approach, when the above-described temperature control is executed for the temperature of the secondary battery 5 in the second period, the duration time of the temperature control from the time point of the end of the charge is set to be longer as the deterioration degree of the negative electrode in the first period is higher. Here, in the temperature control of the secondary battery 5, from the standpoint of, for example, suppressing the excessive temperature rise of the secondary battery 5, there is a case in which, as described above, the temperature of the secondary battery 5 with a higher deterioration degree of the negative electrode is kept in a lower temperature range. In this case, in the temperature control, even if the temperature of the secondary battery 5 is kept in the lower temperature range, the precipitated lithium metal is properly oxidized by the increase of the duration time of the temperature control, and a transition occurs to the state in which the entirety or substantially the entirety of the surface of the precipitated lithium metal is oxidized. Thus, the occurrence of an unintended oxidation reaction of lithium metal is more effectively suppressed during the period until the next operation of the secondary battery 5.

Note that in the above-described approach and the like, the period, such as the winter, during which the environmental temperature of the environment in which the secondary battery is used is low, is mentioned as the example of the period in which the evaluation and diagnosis of the secondary battery 5 are difficult, but the example is not limited to this. For example, when a charger that is used at normal time malfunctions, there is a case in which a charger that executes charge at a high charge rate is substituted to charge the secondary battery 5. Also when the secondary battery 5 is charged at a high charge rate, the voltage of the secondary battery 5 reaches the upper-limit voltage Vmax in a short time. Thus, also during the period in which the secondary battery 5 is charged at a high charge rate, sufficient measurement data to estimate the internal state in regard to the electric current and voltage of the secondary battery 5 is not acquired, and the evaluation and diagnosis of the secondary battery 5 become difficult.

In this case, similarly with the above-described approach and the like, in regard to the second period that is the period in which the diagnosis of the secondary battery 5 is difficult, the state of the secondary battery 5, including a state as to whether lithium metal is precipitated in the negative electrode by the charge, is predicted in advance in the first period before the second period. In addition, when it is predicted that lithium metal is precipitated in the negative electrode by the charge in the second period, based on the result of the diagnosis of the second battery 5 that was executed in the first period, the above-described temperature control to keep the temperature of the secondary battery 5 in the predetermined temperature range is executed after the time point of the end of the charge in the second period. Thus, similarly with the above-described approach and the like, even in the period in which the diagnosis of the secondary battery 5 is difficult, the secondary battery 5 is safely and properly managed based on the state of the secondary battery 5, which is predicted in advance.

In at least one of the above-described approaches or examples, in the second period after the first period in which the secondary battery is diagnosed, the temperature control of the secondary battery is executed when the secondary battery is charged under the charge conditions under which the precipitation of lithium metal in the secondary battery is predicted based on the diagnosis result in the first period. In the temperature control of the secondary battery, the temperature of the secondary battery after the time point of the end of the charge under the above-described conditions in the second period is kept in the predetermined temperature range of the lower-limit temperature to the upper-limit temperature. Thereby, there can be provided a management method, a management device, a management system and a management program of a secondary battery, and a battery-mounted device, which safely and properly manage the secondary battery in a period in which the diagnosis of the secondary battery is difficult, based on the state of the secondary battery that is predicted in advance.

The present disclosure also encompasses the following approaches of a management method, a management device, a management system and a management program of a secondary battery and a battery-mounted device:

1. A management method of a secondary battery (5), comprising:
executing temperature control in a second period after a first period in which the secondary battery (5) is diagnosed, when the secondary battery (5) is charged under a charge condition under which precipitation of lithium metal in the secondary battery (5) is predicted based on a diagnosis result in the first period, the temperature control being executed to keep a temperature of the secondary battery (5) after a time point of an end of charge under the charge condition in a predetermined temperature range of a lower-limit temperature (Tlow) to an upper-limit temperature (Tup).
2. The management method of clause 1, wherein

the lower-limit temperature (Tlow) of the predetermined temperature range is set based on, as a criterion, whether the lower-limit temperature (Tlow) is a temperature at which an oxidation reaction occurs in the lithium metal precipitated in the secondary battery (5), and
the upper-limit temperature (Tup) of the predetermined temperature range is set based on an influence on the temperature of the secondary battery (5) of heat generation due to the oxidation reaction in the lithium metal precipitated in the secondary battery (5).

3. The management method of Clause 1 or 2, wherein an environmental temperature, at which the secondary battery (5) is charged in the second period, is lower than an environmental temperature at which the secondary battery (5) is charged in the first period.
4. The management method of Clause 3, wherein the lower-limit temperature (Tlow) of the predetermined temperature range is higher than the environmental temperature at which the secondary battery is charged in the second period.
5. The management method of any one of Clauses 1 to 4, further comprising determining whether or not to execute the temperature control for the temperature of the secondary battery (5) after the time point of the end of the charge under the charge condition in the second period, based on an estimation result of an internal state of the secondary battery (5) in diagnosis in the first period, and the charge condition in the charge of the secondary battery (5) that is planned to be executed in the second period.
6. The management method of Clause 5, wherein the temperature control for the temperature of the secondary battery (5) is executed after the time point of the end of the charge under the charge condition in the second period, based on at least a fact that a deterioration degree of a negative electrode of the secondary battery (5) exceeds a first reference level, the deterioration degree being based on the internal state of the secondary battery (5) in the first period.
7. The management method of Clause 6, wherein when the temperature control for the temperature of the secondary battery (5) is executed after the time point of the end of the charge under the charge condition in the second period, at least either setting the predetermined temperature range for keeping the temperature of the secondary battery (5) to be lower as the deterioration degree of the negative electrode of the secondary battery (5) in the first period is higher, or setting a duration time of the temperature control from the time point of the end of the charge to be longer as the deterioration degree of the negative electrode of the secondary battery (5) in the first period is higher, is executed.
8. The management method of Clause 6 or 7, further comprising executing at least either forcibly halting use of the secondary battery (5), or issuing an alert to halt the use of the secondary battery (5), based on a fact that the deterioration degree of the negative electrode of the secondary battery (5) in the first period exceeds a second reference level at which the deterioration degree is higher than at the first reference level.
9. A management device (3) of a secondary battery (5), comprising a processor configured to execute temperature control in a second period after a first period in which the secondary battery (5) is diagnosed, when the secondary battery (5) is charged under a charge condition under which precipitation of lithium metal in the secondary battery (5) is predicted based on a diagnosis result in the first period, the temperature control being executed to keep a temperature of the secondary battery (5) after a time point of an end of charge under the charge condition in a predetermined temperature range of a lower-limit temperature (Tlow) to an upper-limit temperature (Tup).
10. A management system (1) of a secondary battery (5), comprising:

the management device (3) of Clause 9; and
the secondary battery (5) in which the temperature control for the temperature is executed by the processor of the management device (3).

11. A battery-mounted device (2) comprising:

the management device (3) of Clause 9; and
the secondary battery (5) in which the temperature control for the temperature is executed by the processor of the management device (3).

12. A management program of a secondary battery (5), the management program causing a computer to execute temperature control in a second period after a first period in which the secondary battery (5) is diagnosed, when the secondary battery (5) is charged under a charge condition under which precipitation of lithium metal in the secondary battery (5) is predicted based on a diagnosis result in the first period, the temperature control being executed to keep a temperature of the secondary battery (5) after a time point of an end of charge under the charge condition in a predetermined temperature range of a lower-limit temperature (Tlow) to an upper-limit temperature (Tup).

While certain approaches have been described, these approaches have been presented by way of example only, and are not intended to limit the scope of the claims. Indeed, the apparatuses described herein may be embodied in a variety of other forms; furthermore, various omissions, substitutions and changes in the form of the apparatuses described herein may be made.

## Claims

1. A management method of a secondary battery (5), comprising:
   executing temperature control in a second period after a first period in which the secondary battery (5) is diagnosed, when the secondary battery (5) is charged under a charge condition under which precipitation of lithium metal in the secondary battery (5) is predicted based on a diagnosis result in the first period, the temperature control being executed to keep a temperature of the secondary battery (5) after a time point of an end of charge under the charge condition in a predetermined temperature range of a lower-limit temperature (Tlow) to an upper-limit temperature (Tup).

2. The management method of Claim 1, wherein

   the lower-limit temperature (Tlow) of the predetermined temperature range is set based on, as a criterion, whether the lower-limit temperature (Tlow) is a temperature at which an oxidation reaction occurs in the lithium metal precipitated in the secondary battery (5), and
   the upper-limit temperature (Tup) of the predetermined temperature range is set based on an influence on the temperature of the secondary battery (5) of heat generation due to the oxidation reaction in the lithium metal precipitated in the secondary battery (5).

3. The management method of Claim 1 or 2, wherein an environmental temperature, at which the secondary battery (5) is charged in the second period, is lower than an environmental temperature at which the secondary battery (5) is charged in the first period.

4. The management method of Claim 3, wherein the lower-limit temperature (Tlow) of the predetermined temperature range is higher than the environmental temperature at which the secondary battery is charged in the second period.

5. The management method of any one of Claims 1 to 4, further comprising determining whether or not to execute the temperature control for the temperature of the secondary battery (5) after the time point of the end of the charge under the charge condition in the second period, based on an estimation result of an internal state of the secondary battery (5) in diagnosis in the first period, and the charge condition in the charge of the secondary battery (5) that is planned to be executed in the second period.

6. The management method of Claim 5, wherein the temperature control for the temperature of the secondary battery (5) is executed after the time point of the end of the charge under the charge condition in the second period, based on at least a fact that a deterioration degree of a negative electrode of the secondary battery (5) exceeds a first reference level, the deterioration degree being based on the internal state of the secondary battery (5) in the first period.

7. The management method of Claim 6, wherein when the temperature control for the temperature of the secondary battery (5) is executed after the time point of the end of the charge under the charge condition in the second period, at least either setting the predetermined temperature range for keeping the temperature of the secondary battery (5) to be lower as the deterioration degree of the negative electrode of the secondary battery (5) in the first period is higher, or setting a duration time of the temperature control from the time point of the end of the charge to be longer as the deterioration degree of the negative electrode of the secondary battery (5) in the first period is higher, is executed.

8. The management method of Claim 6 or 7, further comprising executing at least either forcibly halting use of the secondary battery (5), or issuing an alert to halt the use of the secondary battery (5), based on a fact that the deterioration degree of the negative electrode of the secondary battery (5) in the first period exceeds a second reference level at which the deterioration degree is higher than at the first reference level.

9. A management device (3) of a secondary battery (5), comprising a processor configured to execute temperature control in a second period after a first period in which the secondary battery (5) is diagnosed, when the secondary battery (5) is charged under a charge condition under which precipitation of lithium metal in the secondary battery (5) is predicted based on a diagnosis result in the first period, the temperature control being executed to keep a temperature of the secondary battery (5) after a time point of an end of charge under the charge condition in a predetermined temperature range of a lower-limit temperature (Tlow) to an upper-limit temperature (Tup).

10. A management system (1) of a secondary battery (5), comprising:

the management device (3) of Claim 9; and
the secondary battery (5) in which the temperature control for the temperature is executed by the processor of the management device (3).

11. A battery-mounted device (2) comprising:

the management device (3) of Claim 9; and
the secondary battery (5) in which the temperature control for the temperature is executed by the processor of the management device (3).

12. A management program of a secondary battery (5), the management program causing a computer to execute temperature control in a second period after a first period in which the secondary battery (5) is diagnosed, when the secondary battery (5) is charged under a charge condition under which precipitation of lithium metal in the secondary battery (5) is predicted based on a diagnosis result in the first period, the temperature control being executed to keep a temperature of the secondary battery (5) after a time point of an end of charge under the charge condition in a predetermined temperature range of a lower-limit temperature (Tlow) to an upper-limit temperature (Tup).

Battery-mounted device

Battery

Measuring circuit

Temperature adjuster

Battery controller

Management device

Transmission/ reception unit

Processing unit

Battery diagnosis unit

Data storage unit

Determination unit

Control instruction generation unit

F I G. 1

FIG. 2

```
        ┌─────────────────────────┐
        │   Diagnosis process and  │
        │   determination process  │
        └───────────┬─────────────┘
                    │
        ┌───────────▼─────────────┐
        │  Estimate internal state │─── S51
        └───────────┬─────────────┘
                    │
        ┌───────────▼─────────────┐
        │  Determine deterioration │─── S52
        │  degree of negative      │
        │  electrode               │
        └───────────┬─────────────┘
                    │
              ╱─────────────╲  S53
             ╱ Deterioration ╲    No
            ╱  over first      ╲──────────────────────┐
            ╲  reference level? ╱                     │
             ╲────────────────╱                       │
                    │ Yes                             │
              ╱─────────────╲  S54                    │
             ╱ Deterioration ╲    No                  │
            ╱  over second     ╲────────┐             │
            ╲  reference level? ╱       │             │
             ╲────────────────╱         │             │
                    │ Yes               ▼             │
                    │          ┌─────────────────────┐│
                    │          │ Acquire charge      ││── S56
                    │          │ conditions in       ││
                    │          │ second period       ││
                    │          └──────────┬──────────┘│
                    │                     │           │
                    │               ╱─────────────╲ S57
                    │              ╱  Is lithium    ╲  No
                    │             ╱  metal precipi-  ╲────────┐
                    │             ╲  tated in second ╱        │
                    │              ╲  period?       ╱         │
                    │               ╲─────────────╱           │
                    │                     │ Yes               │
        ┌───────────▼──────┐  ┌───────────▼─────────┐  ┌──────▼──────────────┐
        │ Forcible halt of │  │ Determine to execute│  │ Determine to not    │
        │ use and/or alert │  │ temperature control │  │ execute temperature │
        │                  │  │ in second period    │  │ control in second   │
        └───────┬──────────┘  └──────────┬──────────┘  │ period              │
          S55   │                        │             └──────────┬──────────┘
                │                        │                  S59   │
                │                        ◄────────────────────────┘
                │
        ┌───────▼──────┐
        │    Return    │
        └──────────────┘
```

F I G. 3

Process relating to
temperature control

↓

Start of charge? ──S61 ── No

Yes
↓

End of charge? ──S63 ── No

Yes
↓

Keep in predetermine temperature range ──S64

↓

Has
predetermined duration time
passed? ──S65 ── No

Yes
↓

Terminate temperature control ──S66

↓

Return

# F I G. 4

Process relating to
temperature control

S61

Start of charge? — No

Yes

Keep in predetermine temperature range — S62

S63

End of charge? — No

Yes

Keep in predetermine temperature range — S64

Has
predetermined duration time — No
passed?

S65

Yes

Terminate temperature control — S66

Return

F I G. 5

Europäisches
Patentamt

European
Patent Office

Office européen
des brevets

# EUROPEAN SEARCH REPORT

Application Number

EP 22 18 8128

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2021/159557 A1 (KNUDSON ALAN C [US]) 27 May 2021 (2021-05-27) | 1,3-6, 8-12 | INV. H02J7/00 |
| A | * figure 3 * <br> * paragraphs [0011] - [0032] * <br> ----- | 2,7 | |
| Y | US 2014/239915 A1 (TAKAHASHI KENJI [JP]) 28 August 2014 (2014-08-28) | 1,3-6, 8-12 | |
| A | * figure 5 * <br> * paragraphs [0009], [0042] - [0050] * <br> ----- | 2,7 | |
| A | US 2019/036373 A1 (SHIMURA JUSUKE [JP]) 31 January 2019 (2019-01-31) <br> * paragraphs [0047], [0060], [0090] - [0095] * <br> ----- | 1-12 | |
| A | US 2019/305367 A1 (MIYAJIMA TAKAYUKI [JP]) 3 October 2019 (2019-10-03) <br> * paragraphs [0064], [0073], [0101] * <br> ----- | 1-12 | |

TECHNICAL FIELDS
SEARCHED      (IPC)

H02J

The present search report has been drawn up for all claims

| Place of search | Date of completion of the search | Examiner |
|---|---|---|
| Munich | 31 May 2023 | Berger, Josef |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons
   ........................................................................
& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 22 18 8128

This annex lists the patent family members relating to the patent documents cited in the above-mentioned European search report.
The members are as contained in the European Patent Office EDP file on
The European Patent Office is in no way liable for these particulars which are merely given for the purpose of information.

31-05-2023

| Patent document cited in search report | | | Publication date | Patent family member(s) | | | Publication date |
|---|---|---|---|---|---|---|---|
| US 2021159557 | A1 | | 27-05-2021 | NONE | | | |
| US 2014239915 | A1 | | 28-08-2014 | CN | 104011930 | A | 27-08-2014 |
| | | | | EP | 2770575 | A1 | 27-08-2014 |
| | | | | JP | 5835341 | B2 | 24-12-2015 |
| | | | | JP | WO2013057765 | A1 | 02-04-2015 |
| | | | | KR | 20140073551 | A | 16-06-2014 |
| | | | | US | 2014239915 | A1 | 28-08-2014 |
| | | | | WO | 2013057765 | A1 | 25-04-2013 |
| US 2019036373 | A1 | | 31-01-2019 | JP | 6528897 | B2 | 12-06-2019 |
| | | | | JP | WO2017159031 | A1 | 07-02-2019 |
| | | | | US | 2019036373 | A1 | 31-01-2019 |
| | | | | WO | 2017159031 | A1 | 21-09-2017 |
| US 2019305367 | A1 | | 03-10-2019 | CN | 110311431 | A | 08-10-2019 |
| | | | | JP | 7073837 | B2 | 24-05-2022 |
| | | | | JP | 2019175564 | A | 10-10-2019 |
| | | | | KR | 20190113632 | A | 08-10-2019 |
| | | | | US | 2019305367 | A1 | 03-10-2019 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2018147827 A